(19) Europäisches Patentamt
European Patent Office
Office européen des brevets

(11) EP 3 940 840 A1

(12) EUROPEAN PATENT APPLICATION

(43) Date of publication:
**19.01.2022 Bulletin 2022/03**

(21) Application number: **20185989.9**

(22) Date of filing: **15.07.2020**

(51) International Patent Classification (IPC):
***H01M 10/0525*** *(2010.01)* ***H01M 50/40*** *(2021.01)*
***H01M 50/409*** *(2021.01)*

(52) Cooperative Patent Classification (CPC):
**H01M 10/0525; H01M 50/403; H01M 50/446**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Evonik Operations GmbH**
**45128 Essen (DE)**

(72) Inventors:
- **HUANG, Yuan-Chang**
**10882 Taipei City (TW)**
- **ESKEN, Daniel**
**63526 Erlensee (DE)**
- **KINZLINGER, Uwe**
**63741 Aschaffenburg (DE)**
- **SCHMIDT, Gerold**
**63517 Rodenbach (DE)**
- **SCHARF, Guido**
**63594 Hasselroth (DE)**
- **LEE, Chih-Hung**
**302 Zhubei City,**
**Hsinchu County (TW)**
- **WU, Hung-Chun**
**302 Zhubei City,**
**Hsinschu County (TW)**
- **LIN, Yu-Han**
**510 Yuanlin City,**
**Changhua County (TW)**
- **LIN, Ting-Fang**
**310 Zhudong Township,**
**Hsinchu County (TW)**

(74) Representative: **Evonik Patent Association**
**c/o Evonik Industries AG**
**IP Management**
**Bau 1042A/PB 15**
**Paul-Baumann-Straße 1**
**45772 Marl (DE)**

# (54) NANO-COMPOSITE POLYMER SEPARATOR WITH ENHANCED SAFETY PERFORMANCE AND PREPARATION METHOD THEREOF

(57) A method for manufacturing a porous membrane suitable for use as a separator of a lithium ion battery, comprising the following steps: 1) compounding a polymer and hydrophobic filler by dry mixing; 2) extruding the compounded mixture to obtain a cast film and 3) stretching the cast film to obtain the porous membrane. A porous membrane suitable for use as a separator of a lithium ion battery, a separator for a lithium ion battery, a lithium ion battery, and a device are also provided.

EP 3 940 840 A1

## Description

### Technical Field

The invention relates to a separator for lithium ion battery.

### Background art

Separator is a kind of polymer (such as polyolefin) membrane which is inserted between cathode electrode and anode electrode to prevent short circuit while permitting ionic conductivity via the electrolyte in lithium ion battery. It is important that the separator has good thermal resistance, mechanical strength and dimensional stability during operation of battery in order to comply with safety requirements.

US 6432586 B1 discloses a separator having a ceramic composite layer on top of a polymeric microporous layer, especially for high energy rechargeable lithium battery. The manufacturing process of this ceramic composite layer involves very precious control of coating thickness. The ceramic fillers involved include $SiO_2$, $Al_2O_3$, $TiO_2$ and other materials. Embodiments of this patent disclose compositions comprising 60 parts of $CaCO_3$ and 40 parts of PVDF:HFP, or 30 parts of $SiO_2$ and 30 parts of $CaCO_3$ with 40 parts of PVDF:HFP as components of the coating layer. The function of this coating layer is to block dendrite growth and to prevent electronic shorting.

In industrial applications, the same concept is also applied with even higher filler loading (90-95wt.%) of fine particles of $Al_2O_3$ with small amount of binder as the composition of the coating layer, to block dendrite growth as well as to keep dimensional stability at higher temperature while still maintaining a good ionic conductivity. However, since the coating layer is a ceramic-rich composition, it is a common problem that ceramic particles fall off from the surface of the microporous polymeric substrate. The coating layers also add up to the total thickness of the separator and hence not only increase the production cost but also increase the total thickness of the lithium battery cell.

US 6949315 B1 discloses a separator having good thermal shutdown performance while keeping improved mechanical properties. The manufacturing method comprises mixing a filler ($TiO_2$ or $SiO_2$) and a polymer with a plasticizer oil and extruding the mixture at high temperature in a twin-screw extruder, calendering the sheet, and removing the oil by solvent extraction (so-called wet process). The extraction step is followed by stretching and heat setting. Particle size of $TiO_2$ mentioned is less than 0.2 $\mu$m. The filler is mixed with oil for easier handling process. The loading of the filler of typically 1wt.% to 6wt.% is not sufficient for achieving a good reinforcement. Using a solvent extraction step is not desired in view of its overall negative environmental impact and increased production cost. Therefore, it is necessary to develop an environmentally friendly solution.

US 2012/0145468 A1 discloses various lithium ion battery separators, made by biaxial stretching, having relevantly high filler loading ranging from 50wt.% to 70wt.%, in ultra-high molecular weight polyethylene (UHMWPE) with crosslinkable polyethylene (PE) using also plasticizer or process oil for incorporating ceramic fillers. Examples of filler used in this patent include AEROXIDE® Alu C, SpectaAl® 100, SIPERNAT® D 10, Hi-Sil® SBG. The results show the improvement of electric resistance of separators by all above mentioned fillers compared to those without fillers.

US 8003204 B2 discloses a multi-layer separator with outer layer polypropylene (PP) containing a heat-resistant filler within inner polyethylene (PE) layer to have both a thermal shutdown function (contributed by low melting temperature of PE) as well as thermal resistance (contributed by thermal-resistant filler in PP). During the manufacturing process, pores are created in the polyolefin membrane at the interface between the filler and the PP matrix. All mentioned in this patent fillers are mostly in micrometer size, hence the contact area of the filler with the PP matrix should be limited and adhesion of the filler with the matrix should be reduced. Therefore, the reported content of the thermal-resistant filler is quite high, ranging from 30wt.% to 80wt.%, to achieve the desired performance. Moreover, the fixing of the filler in the PP matrix may be not optimal since crack exists at the interface. With too high content of the filler, the polyolefin loses its flexibility which is important for assembly process of lithium ion battery cell.

Therefore, it is desirable to develop an environmentally friendly separator preparation process which eliminates the need of using plasticizer oil, solvent or process oil and which provides a separator with good mechanical stability, flexibility, good overall electrochemical and safety performance including good thermal resistance, minimum dendrite growth and minimum tendency to electrical shorting.

### Summary of the invention

The objective of the invention is to overcome at least part of the deficiencies of the prior art. The inventors surprisingly found that surface treated fillers can be uniformly incorporated with a reasonable percentage into a polymer (such as a polyolefin) matrix by dry mixing process without use of any plasticizer oil, solvent or process oil, particularly by twin-screw compounding, to make a masterbatch containing the filler. Then the masterbatch can be extruded to make a cast film, which is then stretched with well controlled crystalline temperature of the polymer. Hence pores are generated

by different crystalline phase, to make a porous separator. In the present invention, the pores are generated within the whole polymer matrix (similarly to the pores formed in a pure polymer membrane), which is very different from prior art where pores are generated at the interface between the filler and the polymer. Furthermore, the filler has surface treatment to increase its affinity to the polymer matrix. Therefore, the filler can be efficiently integrated in the polymer matrix, which can significantly contribute to the improvement of the mechanical properties and thermal resistance. Even more surprisingly, when used as a separator of lithium ion batteries, the membrane prepared according to the dry mixing process of the invention presents superior performance such as electrochemical performance and safety performance, compared with membranes prepared by conventional wet process.

The invention provides a method to prepare a porous membrane suitable for use as a separator of a lithium ion battery, comprising the following steps:

1) compounding a polymer and a hydrophobic filler by a dry mixing process, preferably in a twin-screw extruder with at least one side feeder at a rotation speed of 100 rpm to 1000 rpm, preferably 200 rpm to 500 rpm;
2) extruding the compounded mixture prepared in step 1) to obtain a cast film; and
3) stretching the cast film prepared in step 2) to obtain the porous membrane.

The polymer and hydrophobic filler may be compounded at one time; thus it is not necessary to add hydrophobic filler in multiple times or batches. The polymer and hydrophobic filler may also be compounded at two or more times.

Compared with processes of prior art, the inventive process does not require any additional layer to be combined with the membrane nor any lamination steps. The porous membrane prepared according to the process of the invention is a monolayer membrane that can be directly used as a separator.

The invention further provides a porous membrane suitable for use as a separator of a lithium ion battery, prepared according to the method of the invention.

The invention further provides a porous membrane suitable for use as a separator of a lithium ion battery, which comprises a polymer matrix and a hydrophobic filler, wherein the hydrophobic filler is substantially uniformly distributed in the polymer matrix, and the amount of the hydrophobic filler is from 5 % to 40 % by weight, preferably 10%-30 % by weight, based on the total weight of the polymer matrix and the filler.

One prominent advantage of the porous membrane of the invention is that the membrane can be a monolayer membrane that can be directly used as a separator, which is very different from the membranes of prior art which have two or more layers. Furthermore, compared with the membranes prepared by wet process, in the membrane of the invention, the hydrophobic filler is substantially uniformly distributed in the polymer matrix. The problem that filler particles fall off from the surface of the microporous polymeric substrate is also successfully solved. The membrane has significantly improved mechanical properties and thermal resistance.

The invention further provides a separator for a lithium ion battery, comprising the porous membrane according to the invention.

The invention further provides a lithium ion battery, comprising the separator according to the invention.

The invention further provides a device, comprising the lithium ion battery according to the invention. The device includes but not limited to, electric vehicles, electric home appliances, electric tools, portable communication devices such as mobile phones, consumer electronic products, and any other products that are suitable to incorporate the lithium ion battery of the invention as an energy source.

The method of the invention is a dry process or a dry mixing process, which is different from the wet process of prior art. In the method of the invention, the term "dry process" or "dry mixing process" refers to a mixing process that except polymers in liquid state compounded with hydrophobic filler, no liquid, including organic or inorganic liquid, such as diluent, plasticizer or solvent including but not limited to water, oil (such as process oil) or alcohol is required. Preferably, except polymers in liquid state compounded with hydrophobic filler, the method of the invention does not comprise using any liquid. If any other liquid is used, the amount of the liquid is preferably below 50 % by weight, for example, below 40 wt.%, 30 wt.%, 20 wt.%, or 15 wt.%, more preferably below 10 wt.%, for example, below 9 wt.%, 8 wt.%, 7 wt.%, 6 wt.%, 5 wt.%, 4 wt.%, 3 wt.%, 2 wt.%, or 1.5 wt.%, even more preferably below 1 wt.%, for example, below 0.9 wt.%, 0.8 wt.%, 0.7 wt.%, 0.6 wt.%, 0.5 wt.%, 0.4 wt.%, 0.3 wt.%, 0.2 wt.%, or 0.1 wt.%, most preferably below 0.1 wt.%, for example, below 0.09 wt.%, 0.08 wt.%, 0.07 wt.%, 0.06 wt.%, 0.05 wt.%, 0.04 wt.%, 0.03 wt.%, 0.02 wt.%, or 0.01 wt.%, based on the total weight of the polymer and the filler.

The method of the invention does not need to use any plasticizer or plasticizer oil. Plasticizer or plasticizer oil is used in prior art methods when mixing and/or extruding the filler and polymer. Preferably, no plasticizer or plasticizer oil is used in the method of the invention. Therefore, the present method is more environmentally friendly and more cost effective.

The method of the invention does not need to use any resin that may be required in prior art. Therefore, the present method preferably does not use any resin except for the polymers compounded with the hydrophobic filler.

In fact, the method of the invention may use only the polymer and the hydrophobic filler as materials to prepare

the porous membrane suitable for use as a separator of a lithium ion battery. Therefore, the inventive method preferably does not use any other material other than the polymer and the hydrophobic filler. Accordingly, the prepared porous membrane may consist of the polymer and the hydrophobic filler.

Polymer

The polymer is preferably selected from polyolefin, polyamide (PA), polyethylene terephthalate (PET) and polyimide (PI). The polyolefin may be selected from polyethylene, polypropylene (PP), polyisobutylene (PIB), poly-1-butene (PB), copolymers of ethylene and propylene (EP), and copolymers of ethylene and alpha olefins. The polyethylene is preferably selected from high-density polyethylene (HDPE) and ultrahigh molecular weight polyethylene (UHMWPE), especially HDPE, for example, HDPE F04660 commercially available from SABIC.

Hydrophobic filler

The hydrophobic filler is preferably nano-structured metal oxides. Preferably, the hydrophobic filler is selected from hydrophobic surface treated metal oxides such as alumina, $ZrO_2$, MgO and ZnO, and the mixtures thereof, especially alumina. In some examples, the alumina is AEROXIDE® Alu C 805, commercially available from Evonik Operations GmbH. Silica or titanium dioxide are preferably not used due to their adverse effects to some aspects of the performance of lithium ion batteries. Thus, the hydrophobic filler of the invention preferably does not include silica and titanium oxide, or even fillers other than alumina.

The hydrophobic surface treated alumina is preferably selected from the pyrogenically prepared, surface modified aluminum oxide, especially alkyl silane modified aluminum oxide.

Particularly, the hydrophobic surface treated alumina is a pyrogenically prepared, surface modified aluminum oxide, having the following physical chemical properties:

| | |
|---|---|
| Surface area [$m^2/g$] | 35 to 200, preferably 40-180, more preferably 50-150; and |
| Loss on ignition [%] | 0.1 to 15. |

Preferably, the hydrophobic surface treated alumina has been treated with a surface modification agent which is selected from the group consisting of:

a) Organosilanes of the structure

$(RO)_3Si(C_nH_{2n-1})$,

wherein

R = alkyl,
n = an integer selected from 1 - 20;

b) Organosilanes of the structure $R'_x(RO)ySi(C_nH_{2n+1})$ and $R'_x(RO)_ySi(C_nH_{2n-1})$ wherein
R = alkyl,
R' = alkyl,
R' = cycloalkyl,
n = an integer selected from 1 - 20
x+y = 3
x = 1, or 2, and
y = 1, or 2;

c) Organosilanes of the structure $(RO)_3Si(CH_2)$m-R'
R = alkyl,
m = 0, or an integer selected from 1 - 20,
R' = methyl-, aryl,

$-C_4F_9$, $OCF_2-CHF-CF_3$, $-C_6F_{13}$, $-O-CF_2-CHF_2$,
$-NH_2$, $-N_3$, -SCN, $-CH=CH_2$, $-NH-CH_2-CH_2-NH_2$,
$-N-(CH_2-CH_2-NH_2)_2$,

$-OOC(CH_3)C=CH_2$,
$-OCH_2-CH(O)CH_2$,
$-NH-CO-N-CO-(CH_2)_5$,
$-NH-COO-CH_3$, $-NH-COO-CH_2-CH_3$, $-NH-(CH_2)_3Si(OR)_3$,
$-S_x-(CH_2)_3Si(OR)_3$,
-SH, or
-NR'R"R'" (R' = alkyl, or aryl; R" = H, alkyl, or aryl; R'" = H, alkyl, aryl, benzyl, or $C_2H_4NR''''$ R'"" with R"" = H, or alkyl, and R'"" = H, or alkyl);

d) Organosilanes of the structure $(R'')_x(RO)_ySi(CH_2)_m$-R'
R" = alkyl, and x+y = 2, or
= cycloalkyl, and x = 1 or 2
y = 1 or 2
m = 0, or an integer selected from 1 to 20,
R' = methyl, aryl,

$-C_4F_9$, $-OCF_2-CHF-CF_3$, $-C_6F_{13}$, $-O-CF_2-CHF_2$,
$-NH_2$, $-N_3$, -SCN, $-CH=CH_2$, $-NH-CH_2-CH_2-NH_2$,
$-N-(CH_2-CH_2-NH_2)_2$,
$-OOC(CH_3)C = CH_2$,
$-OCH_2-CH(O)CH_2$,
$-NH-COO-CH_3$, $-NH-COO-CH_2-CH_3$, $-NH-(CH_2)_3Si(OR)_3$,
$-S_x-(CH_2)_3Si(OR)_3$, or
-SH-NR'R"R'" (R' = alkyl, or aryl; R" = H, alkyl, or aryl; R'" = H, alkyl, aryl, benzyl, or $C_2H_4NR''''$ R""' with R"" = H, or alkyl and R""' = H, or alkyl);

e) Silazanes of the structure

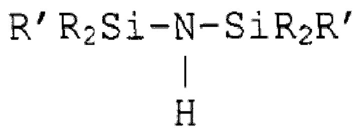

R = alkyl,
R' = alkyl, or vinyl;

f) Cyclic polysiloxanes of the structure D 3, D 4, D 5, wherein
D 3, D 4 and D 5 refer to cyclic polysiloxanes with 3, 4, or 5 units of the structure $-O-Si(CH_3)2-$ ;

g) Polysiloxanes or silicone oils;
and mixture thereof.

More preferably, the hydrophobic surface treated alumina has been treated with a surface modification agent which is selected from the group consisting of:

a) Organosilanes of the structure $(RO)_3Si(C_nH_{2n-1})$, wherein
R = methyl, ethyl, n-propyl, i-propyl, or butyl,
n = an integer selected from 1 - 20,

b) Organosilanes of the structure $(RO)_3Si(CH_2)m$-R'
R = methyl, ethyl, or propyl,
m = 0, or an integer selected from 1 - 20,
R' = $-NH_2$, $-OOC(CH_3)C= CH_2$, or $-OCH_2-CH(O)CH_2$, and

c) Silazanes of the structure

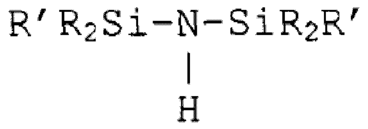

R = methyl,
R' = methyl, or vinyl,
and mixture thereof.

Examples of such surface modification agent may include, octyltrimethoxysilane, oxtyltriethoxysilane, dimethyldichlorosilane, hexamethyldisilazane, 3-methacryloxypropyltrimethoxysilane, 3-methacryloxypropyltriethoxysilane, hexadecyltrimethoxysilane, hexadecyltriethoxysilane, dimethylpolysiloxane, glycidyloxypropyltrimethoxysilane, glycidyloxypropyltriethoxysilane, tridecafluorooctyltrimethoxysilane, aminopropyltriethoxysilane, or mixtures thereof.

The amount of the hydrophobic filler may be from 5% to 40 % by weight, preferably, 10%-30 % by weight, based on the total weight of the polymer and the filler.

In the compounding step, when a twin-screw extruder with at least one side feeder is used, it may be important that the screw rotation speed is from 100 rpm to 1000 rpm, preferably 200 rpm to 500 rpm.

In the compounding step, it may be important that the compounding is carried out in a twin-screw extruder with at least one side feeder. Two or more side feeders may also be used in the invention.

The compounding temperature may be in the range of 220 °C - 260 °C. The length/diameter ratio may be in the range of 30-60. Based on the description, a person skilled in the art can know and adjust the other settings and conditions of the compounding step or extruder operation to prepare a suitable compounded mixture applicable in the invention.

The compounding step can be carried out by a twin-screw extruder equipped with at least one side feeder, with a rotation speed of 200 rpm - 500 rpm, length/diameter ratio in the range of 30-60, temperature of extruder barrels set at 220 °C-260 °C. The masterbatch can contain 20 % by weight or more of alumina.

The compounded mixture can be prepared as a masterbatch.

In the extruding and stretching step, the condition of extruding may be conventional, and the condition of stretching may be also conventional.

The cast films can be prepared using a lab scale cast film unit equipped with a 1.0 mm opening and 28 cm width slit die and two cooling drums.

The extrusion can be carried out at around 220 °C and the distance between the die exit to the nip roll of around 10 cm. The die temperature can be set at 220 °C.

The stretching can be carried out on a biaxial stretching machine.

In the stretching step, the cast film can be
annealed at 120 °C for 30 minutes, and then
extended with 40% ratio with 3000 mm/min at room temperature, then
heated it up to 120°C in 20 minutes, and
extended 60% ratio with 10 mm/min at 120 °C,
followed by a heat setting at 120 °C for 5% relaxation, and
kept it at 120 °C for 10 minutes, and
cooled down to room temperature,
wherein the extension ratio is defined as the ratio of the difference between the obtained length ($L_1$) and the original length ($L_0$) versus the original length ($L_0$):

$$\text{Extension ratio}=(L_1-L_0)/L_0*100\%$$

Relaxation ratio is defined as the ratio of the difference between the original length ($L_0$) and the obtained shrunk length ($L_2$) versus the original length ($L_0$):

$$\text{Relaxation ratio}=(L_2-L_0)/L_0$$

The membrane of the invention has various advantages when used as a separator, such as, superior mechanical property, superior electrochemical property such as Gurley value and AC impedance, superior thermal shrinkage performance, good wettability of electrolyte on the surface of separator, good capacity performance, and, most importantly, excellent safety performance.

Furthermore, when used as a separator, the membrane of the invention has a comparable or even better performance than the separator with coatings in prior art. This may reduce the steps and cost of separator production.

Therefore, the inventive method enables preparation of a porous membrane suitable for use as a separator of a lithium ion battery without use of any plasticizer oil, solvent or process oil, using a suitable amount of a filler. Such prepared separator has superior performance such as mechanical strength and safety performance for lithium ion battery application.

Other advantages of the present invention would be apparent for a person skilled in the art upon reading the specification.

**Brief Description of Drawings**

Figure 1 shows the real time measurement of voltage and temperature of pouch cell with separator of Example 1 (HDPE F04660 + 20wt.% AEROXIDE® Alu C 805) in Figure 1(a) and appearance of battery after nail test with 70 mV voltage drop in Figure 1(b). Temp1 represents the temperature measured at a position which is next to the nail penetration point on the surface of pouch cell. Temp2 represents the temperature measured at a position which is close to the anode electrode but far away from nail penetration point on the surface of pouch cell.

Figure 2 shows the real time measurement of voltage and temperature of pouch cell with separator of Comparative Example 1 (HDPE F04660) in Figure 2(a) and appearance of battery after nail test with 70 mV voltage drop in Figure 2(b).

Figure 3 shows the real time measurement of voltage and temperature of pouch cell with separator of Comparative Example 2 (Asahi Kasei's ND-416 Z) in Figure 3(a) and appearance of battery after nail test with 70 mV voltage drop in Figure 3(b).

Figure 4 shows the real time measurement of voltage and temperature of pouch cell with separator of Comparative Example 3 (Asahi Kasei's ND-416 Z with 2 μm coating) in Figure 4(a) and appearance of battery after nail test with 70 mV voltage drop in Figure 4(b).

Figure 5 shows the real time measurement of voltage and temperature of pouch cell with separator of Example 1 (HDPE F04660 + 20wt.% AEROXIDE® Alu C 805) in Figure 5(a) and appearance of battery after nail test with 80 mV voltage drop in Figure 5(b).

Figure 6 shows the real time measurement of voltage and temperature of pouch cell with separator of Comparative Example 3 (Asahi Kasei's ND-416 Z with 2 μm coating) in Figure 6(a) and appearance of battery after nail test with 80 mV voltage drop in Figure 6(b).

Figure 7 shows the real time measurement of voltage of pouch cell with separator of Example 1 (HDPE F04660 with 20wt.% AEROXIDE® Alu C 805) in Figure 7(a) and appearance of battery after overcharge test in Figure 7(b).

Figure 8 shows the real time measurement of voltage of pouch cell with separator of Comparative Example 1 (HDPE F04660) in Figure 8(a) and appearance of battery after overcharge test in Figure 8(b).

Figure 9 shows the real time measurement of voltage of pouch cell with separator of Comparative Example 2 (Asahi Kasei's ND-416 Z) in Figure 9(a) and appearance of battery after overcharge test in Figure 9(b).

Figure 10 shows the real time measurement of voltage of pouch cell with separator of Comparative Example 3 (Asahi Kasei's ND-416 Z with 2 μm coating) in Figure 10(a) and appearance of battery after overcharge test in Figure 10(b).

Figure 11 shows the pore morphology of the separators under a scanning electron microscope (SEM): Figure 11 (a) shows the separator of Example 1, Figure 11 (b) shows the separator of Comparative Example 1, and Figure

11 (c) shows the separator of Comparative Example 2.

Figure 12 shows the sieving pressure of different aluminas with HDPE.

## Detailed description of the invention

The invention is now described in detail by the following examples. The scope of the invention should not be limited to the embodiments of the examples.

Hydrophobic and hydrophilic alumina

A twin-screw extruder (Coperion, Wemer & Pfleiderer ZSK 30, Germany) was used to incorporate nano-structured alumina into polyethylene (PE) to make a PE masterbatch. In order to achieve targeting reinforcement, the filler content in the embodiment was 20wt.%. During masterbatch preparation process, the sieving pressure over time was monitored as an indication of dispersibility of nano-structured alumina in high density polyethylene (HDPE F04660, SABIC). As shown in Figure 12, the pressure curve of hydrophilic alumina (AEROXIDE® Alu C, commercially available from Evonik Operations GmbH) raised immediately after several minutes, while the curve of hydrophobic surface treated alumina (AEROXIDE® Alu C 805) had a lower slope. That means it's easier to disperse hydrophobic alumina in HDPE to get the masterbatch.

In the following embodiments, the preferred nano-structured alumina was therefore the hydrophobic one, AEROXIDE® Alu C 805.

In the following examples, the performance of separators made from the inventive membrane were compared with the commercial pure PE separator (Comparative Example 1), commercial filler-containing PE separator made by wet process (Comparative Example 2), and commercial filler-containing PE separator made by wet process with a further filler coating (Comparative Example 3). The separators made from the inventive membrane showed surprisingly superior performance, especially safety performance.

Example 1 separator made from the inventive porous HDPE membrane

Preparation of the masterbatch

In order to achieve 20 wt.% filler loading in HDPE, the compounding HDPE F04660 AEROXIDE® Alu C 805 was carried out in a twin-screw extruder (Coperion, Werner & Pfleiderer ZSK 30, Germany) equipped with one side feeder in two extrusion steps (each extrusion step incorporating half amount of the alumina), with a screw speed of 280 rpm, length/diameter ratio of 36, temperature of extruder barrels set with decreasing temperature profile setting down the melt stream, 240°C for first extruder barrel after main hopper, then decrease to 200 °C for last extruder barrel before die head. Recorded melt temperature in the die head was 223°C. 900 g alumina was added through the side feeder and compounded with 8100 g HDPE F04660 in the first extrusion step to achieve 10 wt.% filler loading.

A second extrusion steps was applied to achieve 20 wt.% loading of AEROXIDE® Alu C 805 (each extrusion step 10 wt.%): 7200 g of the compounded mixture obtained above was fed into the extruder again and further compounded with 900 g AEROXIDE® Alu C 805 added through the side feeder according to the same procedure above. Then a PE masterbatch containing 20 wt.% AEROXIDE® Alu C 805 was obtained.

Preparation of a porous membrane from the masterbatch

The PE masterbatch was firstly extruded to obtain cast films and then the cast films were stretched to prepare porous membranes. Using the above prepared PE masterbatch, the cast films were prepared using a lab scale cast film unit from Leistritz equipped with a 1.0 mm opening and 28 cm width slit die and two cooling drums.

The extrusion of the PE masterbatch was carried out at 220 °C and the distance between the die exit to the nip roll was 10 cm. The die temperature was set at 220 °C. After this step, the cast film for stretching was obtained.

The stretching was then carried out on a biaxial stretching machine (Toyo Seiki). The cast film was firstly annealed at 120 °C for 30 minutes, and then extended with 40% ratio with 3000 mm/min at room temperature. It was then heated up to 120 °C in 20 minutes and extended 60% ratio with 10 mm/min at 120 °C, followed by a heat setting at 120 °C for 5% relaxation, and kept at 120 °C for 10 minutes and then cooled down to room temperature. Then a porous membrane was obtained.

The porous membrane was used for measurement of physical/chemical/mechanical performance and as separator for lithium ion battery cell assembly.

Comparative Example 1: HDPE F04660 separator

A porous membrane was prepared based on a commercially purchased HDPE F04660. The membrane was prepared according to the same extrusion and stretching methods as in Example 1 using the HDPE F04660.

Comparative Example 2: Asahi Kasei's ND-416 Z separator

A commercial PE separator ND-416 Z from Asahi Kasei (with UHMWPE) made by wet process was purchased and used as separator of Comparative Example 2.

Comparative Example 3: Asahi Kasei's ND-416 Z separator with 2μm coating

The ND-416 Z separator was used as base substrate for further coating, with a ceramic coating formulation: "AERODISP® W 450 ZX" (which is a water based dispersion comprising 50wt.% of fumed alumina, commercially available from Evonik Operations GmbH, Germany), and acrylic type of binder TRD202A (from JSR, Japan), with a weight ratio of fumed alumina: binder = 20 : 1. The coating was performed with a slot-die coating machine ("Easycoater EC58" from Coatema Coating Machinery GmbH, Germany), with coating speed of slot-die at 0.4 m/min and flow rate at 0.8 ml/min, followed by drying at 50 °C for 2 hours. A single side coated separator with a final dry coating layer having a thickness of 2 μm was obtained.

**Pore morphology of the separators**

The pore morphology of the separators was examined under a scanning electron microscope. As shown in Figure 11, the pore morphology of the inventive separators is significantly different from the one in the separator according to Comparative Example 2. The pores of the separator according to Example 1 are generated within the whole polymer matrix and are similar to the pores formed in a pure polymer membrane of Comparative Example 1 but are very different from those of wet process made separators according to Comparative Examples 2. In separators according to Comparative Example 2, pores were generated from the space of the solvent extracted during the wet process.

**Mechanical property of separators**

In order to check the mechanical properties of obtained separators, tensile strength and elongation were measured by a universal tensile test machine (Hung Ta Instrument Co., Ltd., Taiwan), based on ASTM D882 standard. From the results as shown in Table 1, it can be seen that by adding AEROXIDE® Alu C 805, the tensile strength was improved by 14%, while the elongation was improved by 28%, compared to the intrinsic HDPE. If further comparing the results with those of Asahi Kasei's commercial separator, the compounded separator also outperformed in this regard, showing that a good mechanical reinforcement by nano-structured alumina was obtained. This shows that the inventive separator made by dry process has superior mechanical property than the separator of prior art made by wet process.

**Table 1 Mechanical properties of separators**

| | Tensile strength (kg/cm$^2$) | Elongation (%) |
|---|---|---|
| HDPE F04660 | 1305 | 61 |
| HDPE F04660 + 20wt.% Alu C 805 | 1487.7 | 78 |
| Asahi Kasei's ND-416 Z | 1072 | 68 |

Gurley value and AC impedance of separators

Gurley value is a measurement of time for air flow through porous membrane, which is an indication for flowability of liquid electrolyte, representing electrical conductivity of the separator. The measurement was done by a Gurley meter with 10 cc air flow, based on ASTM D726-58. AC impedance of the separator can further be measured by inserting separator between two stainless plates, filling the electrolyte into the gaps, then applying a voltage at 3.6 V at 0.1-100000 Hz to the stainless plates. The latter result is more relevant to the performance in lithium ion battery.

The results are shown in Table 2. Despite Asahi Kasei's PE separator had lowest Gurley value and AC impedance, the influence of thickness on Gurley value and AC impedance cannot be ignored. Therefore, the measured value was further normalized by thickness of the test specimen to obtain the normalized results as shown in Table 2. These

results indicate that the separator with compounded AEROXIDE® Alu C 805 shows comparable Gurley value and better AC impedance to the commercial Asahi Kasei's PE separator made by wet process, while better performance compared with intrinsic properties of HDPE separator, showing excellent improvement by adding AEROXIDE® Alu C 805.

**Table 2 Gurley values and AC impedance and normalized values by thickness of separators**

| | Thickness | Gurley (10 cc) | AC impedance | Normalized Gurley | Normalized AC impedance |
|---|---|---|---|---|---|
| Unit | Mm | Sec | Ω | Sec/μm | Ω/μm |
| HDPE F04660 | 17.1 | 16.3 | 2.68 | 0.95 | 0.1567 |
| HDPE F04660 + 20wt.% Alu C 805 | 18.5 | 13.7 | 2.21 | 0.74 | 0.1195 |
| Asahi Kasei's ND-416 Z | 16.0 | 10.3 | 1.95 | 0.71 | 0.1219 |

Contact angle of separators

Measurement of contact angle is an indicator of wettability of electrolyte on the surface of separator. From the results as shown in Table 3, all the three separators have comparable contact angle since the surface conditions are similar, with PE exposed to electrolyte.

Table 3 Contact angle of separators

| | Contact angle with electrolyte |
|---|---|
| HDPE F04660 | 41 ° |
| HDPE F04660 + 20wt.% Alu C 805 | 40° |
| Asahi Kasei's ND-416 Z | 44° |

Thermal shrinkage of separators

Thermal shrinkage of different separators at high temperature at 110 °C and 125 °C, respectively, were tested. The test was set based on ASTM 1204-94 standard. Separators with pre-determined area with 5 cm x 5 cm were fixed between two papers at four ends to prevents rolling up during the elevated temperatures and put in the oven heated up at selected temperature for 0.5 hours, taken out for dimensional check. The percentage shown was measured along MD direction. The results were summarized in Table 4 below.

**Table 4 Shrinkage percentage of separators at high temperature**

| | 110 °C | 125 °C |
|---|---|---|
| HDPE F04660 | 6% | 20% |
| HDPE F04660 + 20wt.% Alu C 805 | 4% | 12% |
| Asahi Kasei's ND-416 Z | 4% | 16% |

PE tends to shrink at high temperature, once it has shrunk, it will lose the functionality of separator (separating cathode and anode), leading to short circuit. As shown in Table 4, the inventive compounded separator has superior thermal shrinkage compared with separator of prior art made by wet process, which is very important for achieving safety performance of LiB operated at high temperature.

However, this is only static demonstration in terms of safety performance, since most of the lithium ion batteries will not be operated at so high temperature. Instead, failed batteries may be found during operation. Thus, the test methods with dynamic simulation just like the battery operation is still necessary to further determine the performance of the separator.

**Performance test in a real lithium ion battery**

In order to check the real performance of the invented separator, it is necessary to assemble the separator in a real lithium ion battery for further tests. The designed platform for this test is a 2.5Ah pouch cell with cathode NCM 811 (a cathode composition with 80% nickel, 10% manganese, and 10% cobalt), commercial graphite as anode and 1M $LiPF_6$ in EC/EMC/DMC (ethylene carbonate + dimethyl carbonate + ethylmethyl carbonate, 1:1:1 vol.%) solvent as the electrolyte. Separators selected in the following tests included the blank separator according to Comparative Example 1 (made of HDPE F04660 only), the inventive separator according to Example 1 (made of HDPE F04660 compounded with 20 wt.% AEROXIDE® Alu C 805), benchmark PE separator according to Comparative Example 2 (Asahi Kasei's ND-416Z made by wet process) and coated PE separator according to Comparative Example 3 (ND-416 Z with single side 2μm coating with AEROXIDE® Alu 65). Cathode electrodes were prepared by mixing NMC811, carbon black (Super P), PVDF binder and oxalic acid in a weight ratio of 94.9:3:2:0.1. The slurries were coated on aluminum current collectors via a slot-die coater and dried in a continuous oven at 110°C. Anode electrodes were prepared by mixing commercial graphite (MG11-A, commercially available from China Steel Chemical Corporation, Taiwan), carbon black (Super P), synthetic graphite (TIMCAL TIMREX® KS6 Primary Synthetic Graphite), styrene-butadiene rubber (SBR) and carboxymethyl cellulose (CMC) in a weight ratio of 92.2:1:3:2:1.8. The slurries were coated on copper current collectors via slot-die coater and dried in a continuous oven at 90°C. After the coating process, cathode and anode electrode were calendared into proper thickness. The density of the cathode/anode electrode were 3.25 g/cm$^3$ and 1.65 g/cm$^3$ respectively. Then the electrodes were slit into proper size for 2.5Ah pouch cell, with 55mm*82mm for cathode and 57mm*84mm for anode in rectangle shape.

Cell assembling steps in the tests described were as follows:

(1) Place selected separator on the staking fixture as for the bottom of the cell.
(2) Place one anode electrode on the separator.
(3) Place one separator on the anode electrode.
(4) Place one cathode electrode on the separator.
(5) Place one separator on the cathode electrode.
(6) Repeat the step from step (2) to (5) for 11 times.
(7) Place one anode electrode on the separator.
(8) Place one separator on the anode electrode as for the top of the cell.
(9) Recap the fixture, then weld the current collector with the ultrasonic welding.
(10) Remove the fixture and use the PI tape to fix the cell, then put it into the aluminum pouch bag.
(11) Hot press the cell for 2 mins at 60°C to increase the contact between layers.
(12) Seal the edge of the cell.
(13) Inject the electrolyte and vacuum for 15 mins to increase the wettability. Reseal the bottom of the cell and ready for formation.

Electrochemical performance test

In capacity check, the batteries were charged up to a cell voltage of 4.2 V followed by a taper charge of this potential (4.2 V) with a cut-off current of 40 mA. The discharge current kept the same current down to a cut-off voltage of 2.8 V. All charge-discharge cycling tests and performance tests were conducted with a battery test system (MACCOR SERIES 4000 AUTOMATED, MACCOR, Inc., Oklahoma, USA) at room temperature. The C-rate test can check the discharge power ability of LIBs. The cell discharged from 4.2V to 2.8V with different C-rate current such as 0.2C, 0.5C, 1C and 2C. The discharge capacity was represented as the retention rate of the initial 0.2C discharge capacity. Cycle life test indicated the reliability of the lithium ion batteries. The lithium ion batteries charged & discharged with 1C current and the voltage interval was 2.8V-4.2V.

**Table 5 Electrochemical performance of various separators in 2.5Ah pouch cell**

| | Capacity retention | | |
|---|---|---|---|
| Separators | 1C | 2C | Cycling at room temperature for 200 cycles |
| F04660 | 93.5% | 88.9% | 94.1% |
| F04660 + Alu C 805 | 94.1% | 91.2% | 95.2% |
| ND-416 Z | 94.0% | 90.9% | 95.8% |
| ND-416 Z with 2μm coating | 94.0% | 91.1% | 95.1% |

As shown in Table 5, the inventive separator has much superior electrochemical performance (in terms of capacity retention discharging at 1C, 2C and cycling for 200 cycles) compared to Comparative Example 1 (F04660), and comparable to those of Comparative Examples 2 and 3.

## Safety performance evaluation

Safety performance evaluation includes nail penetration test via a nail penetration tester and overcharge test.

### Nail penetration test

The nail penetration is a method that provides an internal short circuit scenario and evaluate the safety of the cell. The set-up was based on a safety chamber with good gas exhaust and fire protection, and most importantly with a motor controlled moving tip. During the test, some sensors were attached on/with a battery and record the temperature/voltage change during penetration. In the test, the most severe conditions were chosen to distinguish the safety performance of various separators in pouch cell. Type of nail selected was glass fiber with 3mm diameter, which simulated severe internal short circuit scenario since it was easier to accumulate heat with glass fiber tip compared to metallic ones. Nail speed was set at 1 mm/sec. Voltage drop was set at 70mV for partial penetration to identify the safety of the cell. Once the voltage drop exceeded 70mV, the nail would stop penetrating and hold for 5 minutes. If the separator could not stop the voltage leak, voltage would keep dropping and cause energy releasing. With heat accumulating, the cell would go thermal runway eventually. On the other hand, if the separator stopped the voltage leak during the test, cell could hold the voltage and prevent thermal runway.

As shown in Figures 2 and 3, in the nail penetration test with 70 mV voltage drop, both pouch cells with HDPE F04660 and Asahi Kasei's separators exploded right after penetration started shortly. It is easy to understand that both separators do not have any mechanism to prevent thermal runaway during the nail penetration. While the pouch cells with HDPE F04660 with 20wt.% AEROXIDE® Alu C 805 and coated Asahi Kasei's separators didn't exploded and voltage kept stable during penetration, showing that the reinforcement by incorporation or coating nano-structured alumina helped to prevent thermal runaway, as shown in Figures 1 and 4. The real time temperature measure showing temperature raised to around 50 °C near the penetrating point on pouch cell, also proved that both separators prevented thermal runaway effectively.

To further compare the safety performance of compounded and coated separators, voltage drop during nail penetration was set at higher level at 80 mV. As shown in Figures 5 and 6, pouch cells with both separators according to Example 1 and Comparative Example 3 did not explode after nail penetration. The real time voltage/temperature measurement showed continuous decline of voltage, as well as temperature raise up to 100 °C near the penetrating point on pouch cell. Both separators showed similar performance, however, this was already a critical point for both separators to hold the thermal runway.

### Overcharge test

Overcharge test is another method to evaluate the safety performance of the cell with abnormal charging process. In the test, lithium ions keep leaving from cathode material and at the end the cathode structure will start collapse. Once cathode collapses, it triggers a chain reaction such as heat/gas generation, electrolyte decomposition, internal short circuit and thermal runway.

In this test, cell was fully charged first and then started charge to 6V with 1C current for 1 hour. During the overcharge test, heat and gas generation would deform the shape of the cells and the separators got shrinkage. As shown in Figures 8 and 9, cells with HDPE F04660 and Asahi Kasei's separator couldn't pass the tests as they exploded at the end, since the separators shrinkage caused the internal short and induced thermal runway. By contrast, as shown in Figures 7 and 10, cells with HDPE F04660 + 20wt.% AEROXIDE® Alu C 805 and coated Asahi Kasei's separator did not explode. From the real time voltage measurement it was surprisingly found that the voltage of cell with HDPE F04660 + 20wt.% AEROXIDE® Alu C 805 kept quite stable until the end of test, but the voltage of cell with coated Asahi Kasei's separator dropped after overcharging for some time, showing that the compounded separator of the invention has outstanding performance to keep its integrity and prevent thermal runaway. All the safety performance was summarized in Table 6 below.

**Table 6 Safety performance by nail tests and overcharge tests of various separators in 2.5Ah pouch cell**

| | Safety performance tests | | |
|---|---|---|---|
| Separators | Nail test with 70 mV voltage drop | Nail test with 80 mV voltage drop | Overcharge to 6V for 1hr |
| F04660 | Explosion | - | Explosion |
| F04660 + Alu C 805 | Pass | Pass | Pass without voltage drop |
| ND-416 Z | Explosion | - | Explosion |
| ND-416 Z with 2μm coating | Pass | Pass | Pass, with voltage drop |

Puncture test and hot tip test on separators

In order to know more about the mechanism why the reinforced separators could outperform in safety tests, the evaluation of puncture test and hot tip test on separators was carried out. Puncture test with tip penetrating separator which has fixed on metal carrier can determine the resistance to penetration, either from internal forming lithium dendrite or external mechanical impact force, during battery storage. Hop tip test with heated tip penetrating fixed separators can even further explain the dynamic resistance of separators to applied force at high temperature, simulating the resistance of separators to the penetration during battery operation.

Set-up for puncture test was designed based on ASTM D5748 standard. Tested separator, which had been fixed on the stainless fixture, had 3 mm in radius. Speed of tip was set at 50 mm/min. The loadcell equipped on top of tip recorded the force until the separator was broken. This test could simulate the mechanical resistance, to external impact or lithium dendrite inside LiB cell, of separator during static application condition such as storage or transportation of lithium battery. Set-up for hot tip test was the same as puncture test, but using the tip which could be heated at a constant temperature. In the test, the temperature of tip was set at 120 °C. The tip speed was set at 20 mm/min, with a fixed penetration depth at 1.5 mm (taking the position where tip touches the separator as zero point), and the force change was recorded for 120 seconds. Hot tip test can simulate the mechanical resistance, to external impact or lithium dendrite inside LiB cell, of separator during dynamic application condition such as charging or discharging of lithium battery.

Despite the force at the broken of compounded separator was inferior to others, this was more relevant to the static situation so it is better to check the performance at pre-determined displacement to simulate the application. In this case, the force with fixed 2mm depth penetration was checked. It was surprisingly found that the compounded separator according to Example 1 had comparable result compared to coated separator according to Comparative Example 3 and outperformed to HDPE separator according to Comparative Example 1 and Asahi Kasei's separator according to Comparative Example 2. As mentioned above, the hot tip test was used to simulate the dynamic situation, so the response versus time also needed to be considered. In the measurement, the inventors continuously recorded the force during the test period and checked the time when the force decayed to half, which represented resistance to external impact during operation.

From the results, it was surprisingly found that the length of time of compounded separator was 40% higher than those of Asahi Kasei's separator according to Comparative Example 2 and coated separator according to Comparative Example 3 and was even 250% of the blank separator according to Comparative Example 1. This shows that the nano-structured alumina reinforced separator of the invention has excellent mechanical resistance to external impact or internal lithium dendrite for both static and dynamic conditions.

The overall performance of various separators in puncture tests and hop tip test were summarized in Table 7 below.

**Table 7 Puncture tests at room temperature and hop tip tests at 120 °C of various separators**

| | Puncture test at RT | | Hot tip tests at 120 °C | | |
|---|---|---|---|---|---|
| | Force at broken | Force at 2mm displacement | Ultimate force | Force at the end | Time for 1/2 force |
| Unit | gf/mil | gf/mil | gf/mil | gf/mil | Sec |
| F04660 | 404 | 54.3 | 57.2 | 17.2 | 1.60 |

(continued)

| | Puncture test at RT | | Hot tip tests at 120 °C | | |
|---|---|---|---|---|---|
| | Force at broken | Force at 2mm displacement | Ultimate force | Force at the end | Time for 1/2 force |
| F04660 + Alu C 805 | 372 | 148 | 61.9 | 18.1 | 4.02 |
| ND-416 Z | 492 | 95.3 | 83.1 | 23.6 | 2.83 |
| ND-416 Z with 2um coating | 438 | 167 | 94.1 | 20.3 | 2.57 |

As used herein, terms such as "comprise(s)" and the like as used herein are open terms meaning 'including at least' unless otherwise specifically noted.
All references, tests, standards, documents, publications, etc. mentioned herein are incorporated herein by reference. Where a numerical limit or range is stated, the endpoints are included. Also, all values and subranges within a numerical limit or range are specifically included as if explicitly written out.

The above description is presented to enable a person skilled in the art to make and use the invention and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown but is to be accorded the widest scope consistent with the principles and features disclosed herein. In this regard, certain embodiments within the invention may not show every benefit of the invention, considered broadly.

## Claims

1. A method for manufacturing a porous membrane suitable for use as a separator of a lithium ion battery, comprising the following steps:

    1) compounding a polymer and a hydrophobic filler by a dry mixing process;
    2) extruding the compounded mixture prepared in step 1) to obtain a cast film; and
    3) stretching the cast film prepared in step 2) to obtain the porous membrane.

2. The method of claim 1, wherein the compounding is carried out in a twin-screw extruder with at least one side feeder at a rotation speed of 100 rpm to 1000 rpm.

3. The method of claim 1, wherein the compounding is carried out in a twin-screw extruder with at least one side feeder at a rotation speed of 300 rpm to 600 rpm.

4. The method of claim 1, wherein the method does not comprise using any liquids except polymers in liquid state compounded with hydrophobic filler; or if any liquid is used in the method, the amount of the liquid is below 10 % by weight, based on the total weight of the polymer and the filler.

5. The method of claim 1, wherein the amount of the hydrophobic filler is from 5% to 40 % by weight, based on the total weight of the polymer and the filler.

6. The method of claim 1, wherein the amount of the hydrophobic filler is from 10% to 30 % by weight, based on the total weight of the polymer and the filler.

7. The method of claim 1, wherein the polymer is selected from polyolefin, polyamide, polyethylene terephthalate and polyimide, and mixtures thereof.

8. The method of claim 7, wherein the polyolefin is selected from polyethylene, polypropylene, polyisobutylene, poly-1-butene, copolymers of ethylene and propylene, and copolymers of ethylene and alpha olefins; the polyethylene is preferably selected from high-density polyethylene and ultrahigh molecular weight polyethylene.

**9.** The method of claim 1, wherein the hydrophobic filler is selected from hydrophobic surface treated alumina, $ZrO_2$, MgO, ZnO, and mixtures thereof.

**10.** The method of claim 1, wherein the hydrophobic filler is selected from alkyl silane modified aluminum oxides, especially AEROXIDE® Alu C 805 manufactured by Evonik Operations GmbH.

**11.** A porous membrane suitable for use as a separator of a lithium ion battery, which comprises a polymer matrix and a hydrophobic filler, wherein the hydrophobic filler is substantially uniformly distributed in the polymer matrix, and the amount of the hydrophobic filler is from 5 % to 40 % by weight, based on the total weight of the polymer matrix and the filler.

**12.** The porous membrane of claim 11, wherein the membrane is a monolayer membrane that can be directly used as the separator.

**13.** A separator for a lithium ion battery, comprising the porous membrane according to any one of claims 11-12 or the porous membrane prepared according to the method of any one of claims 1-10.

**14.** A lithium ion battery, comprising the separator according to claim 13.

**15.** A device, comprising the lithium ion battery according to claim 14.

Figure 1

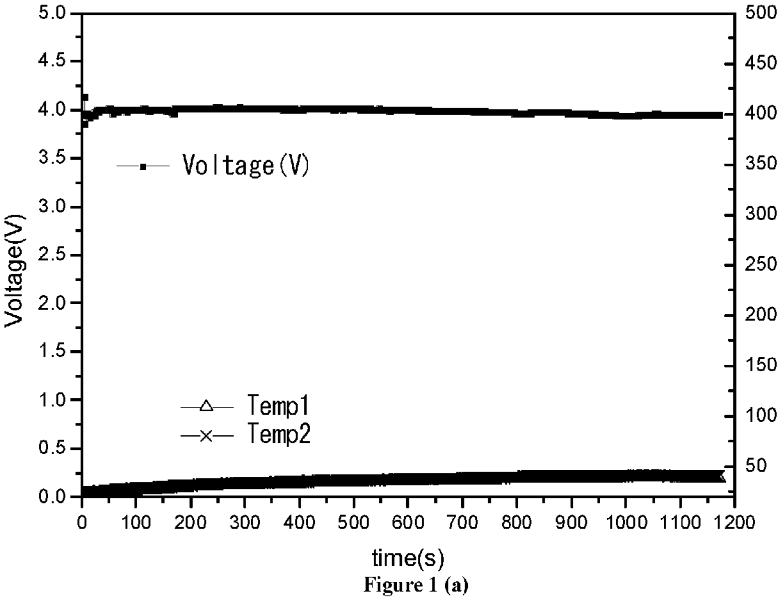

Figure 1 (a)

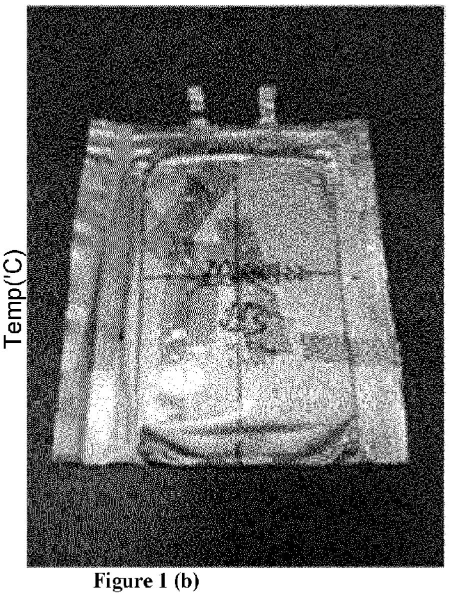
Figure 1 (b)

Figure 2

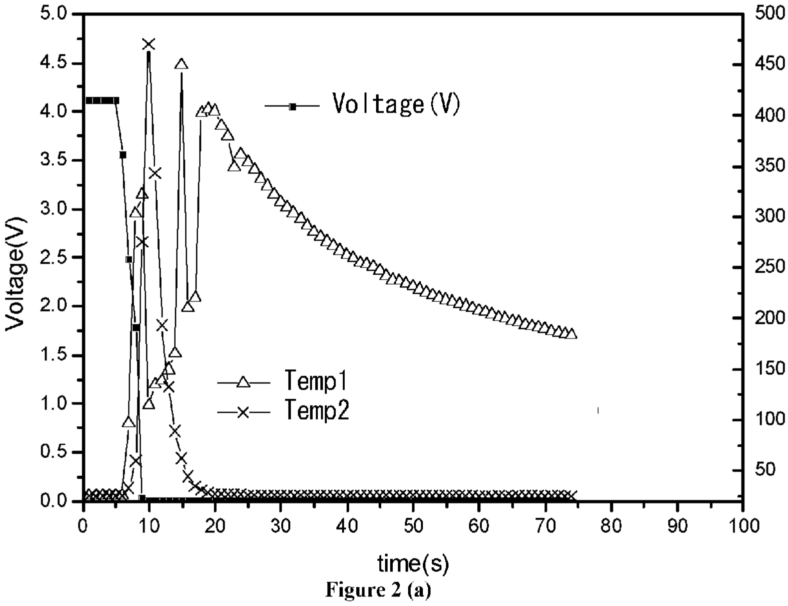


Figure 2 (a)

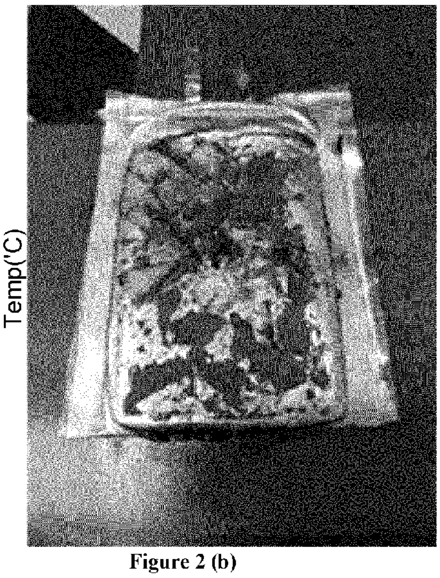

Figure 2 (b)

Figure 3

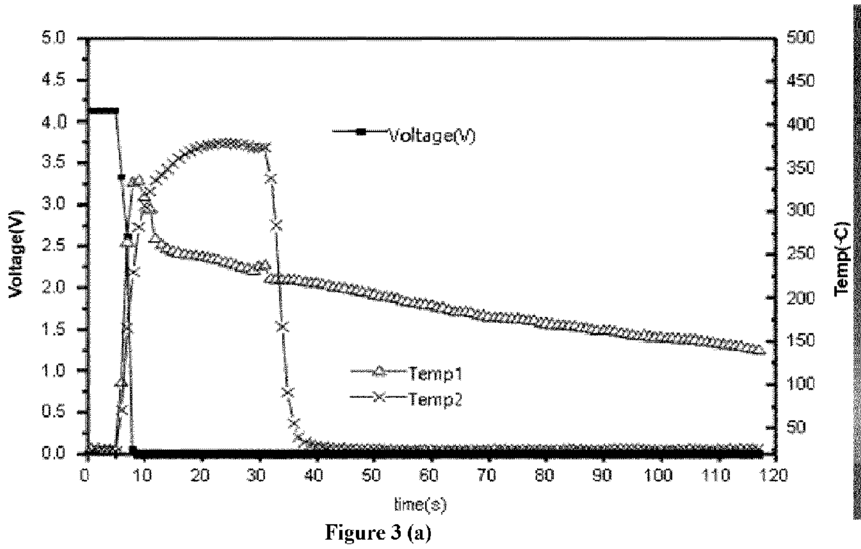


Figure 3 (a)

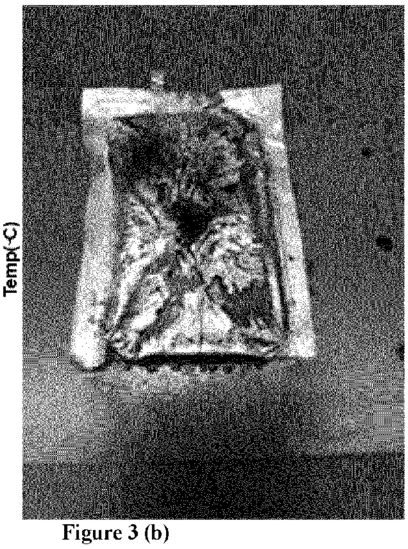

Figure 3 (b)

Figure 4

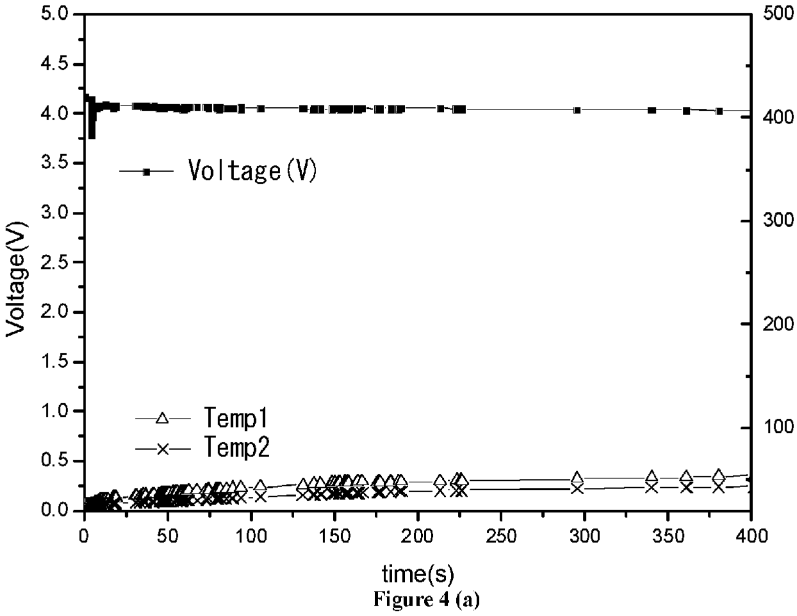


Figure 4 (a)

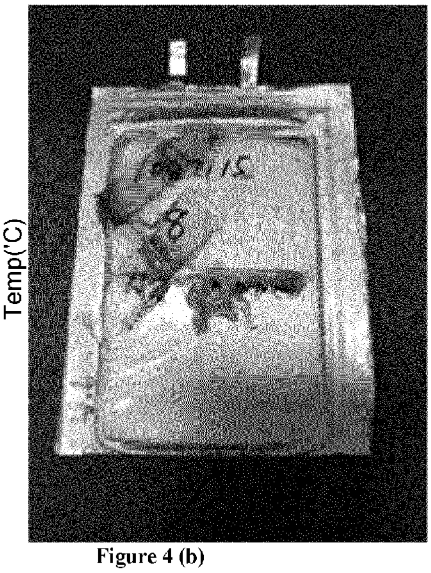

Figure 4 (b)

Figure 5

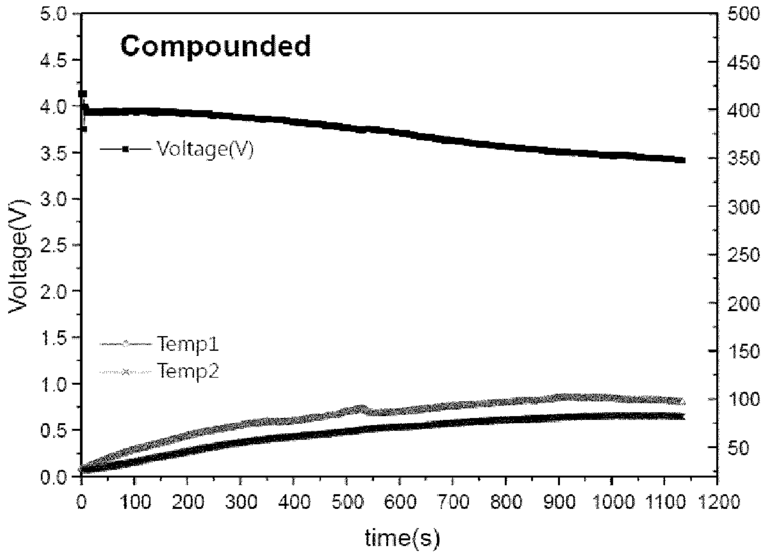

Figure 5 (a)

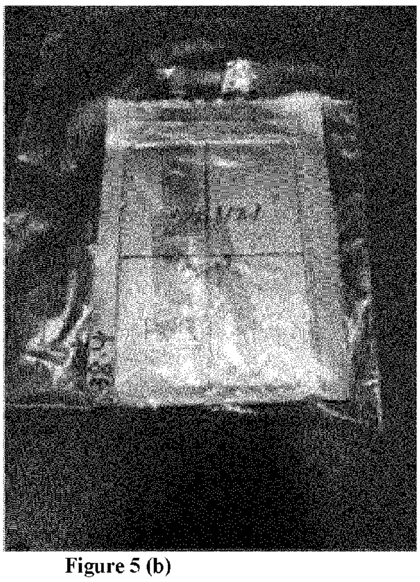
Figure 5 (b)

Figure 6

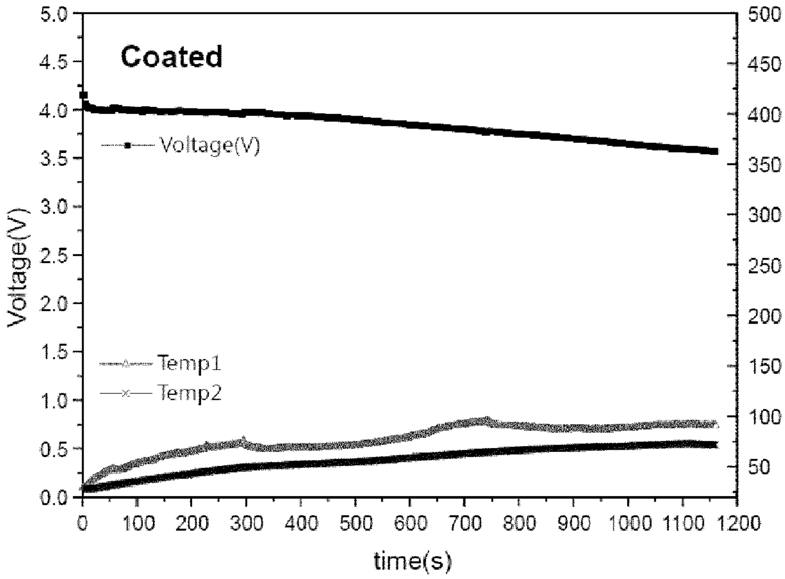


Figure 6 (a)

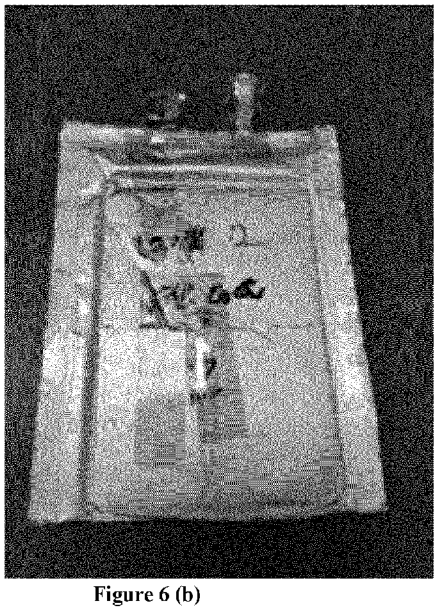

Figure 6 (b)

Figure 7

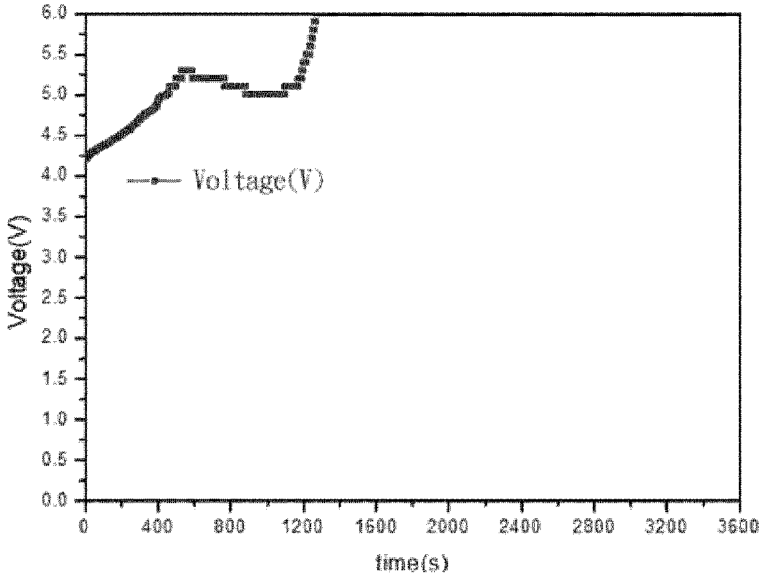


Figure 7 (a)

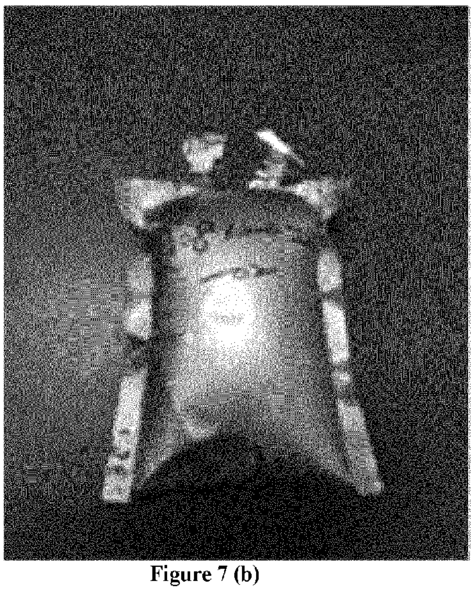

Figure 7 (b)

Figure 8

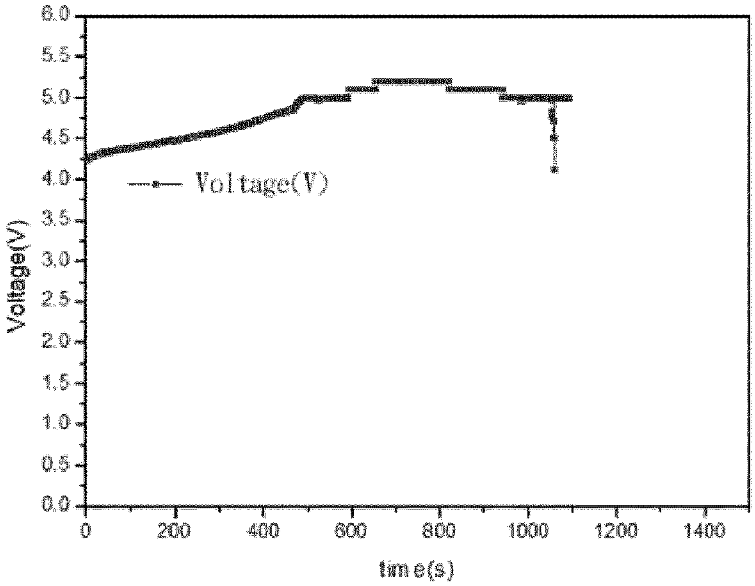

Figure 8 (a)

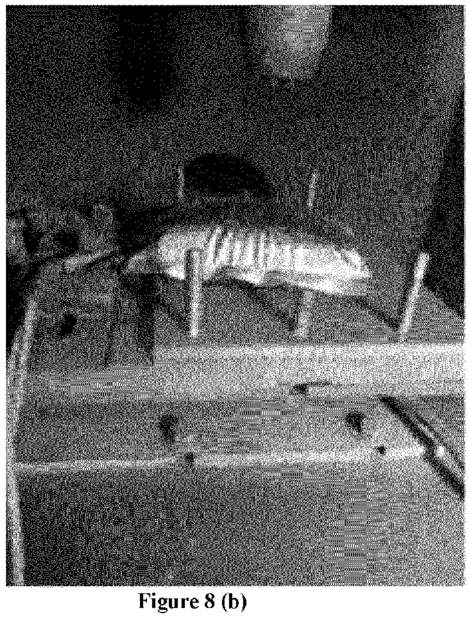
Figure 8 (b)

Figure 9

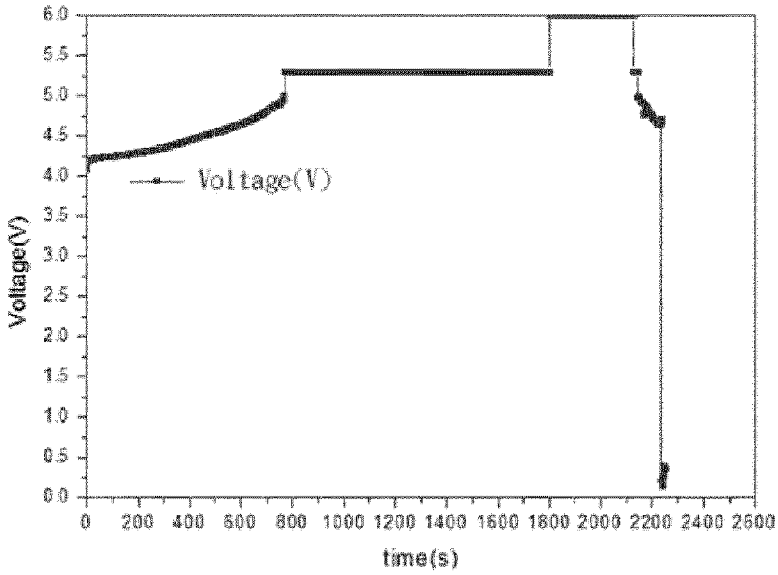


Figure 9 (a)

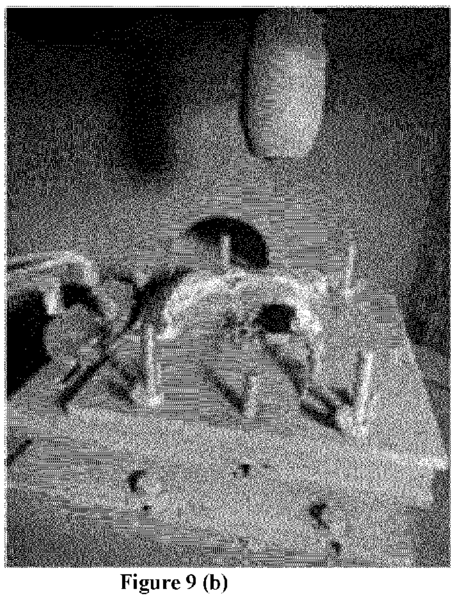

Figure 9 (b)

Figure 10

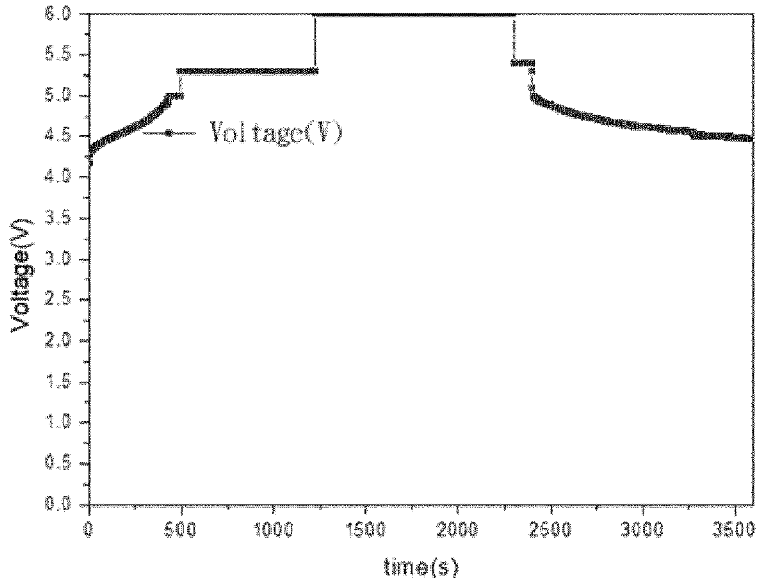


Figure 10 (a)

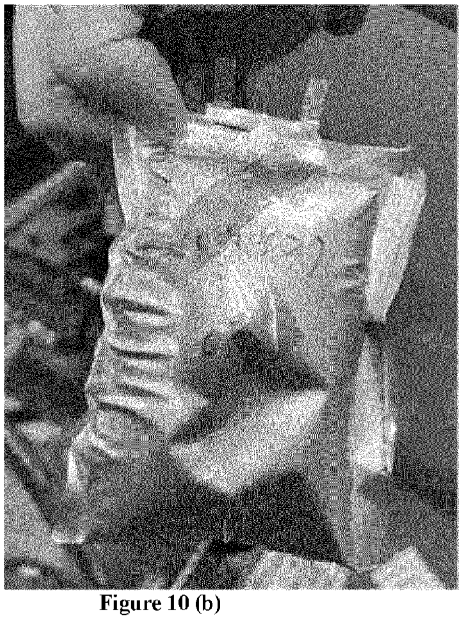

Figure 10 (b)

Figure 11 (a)

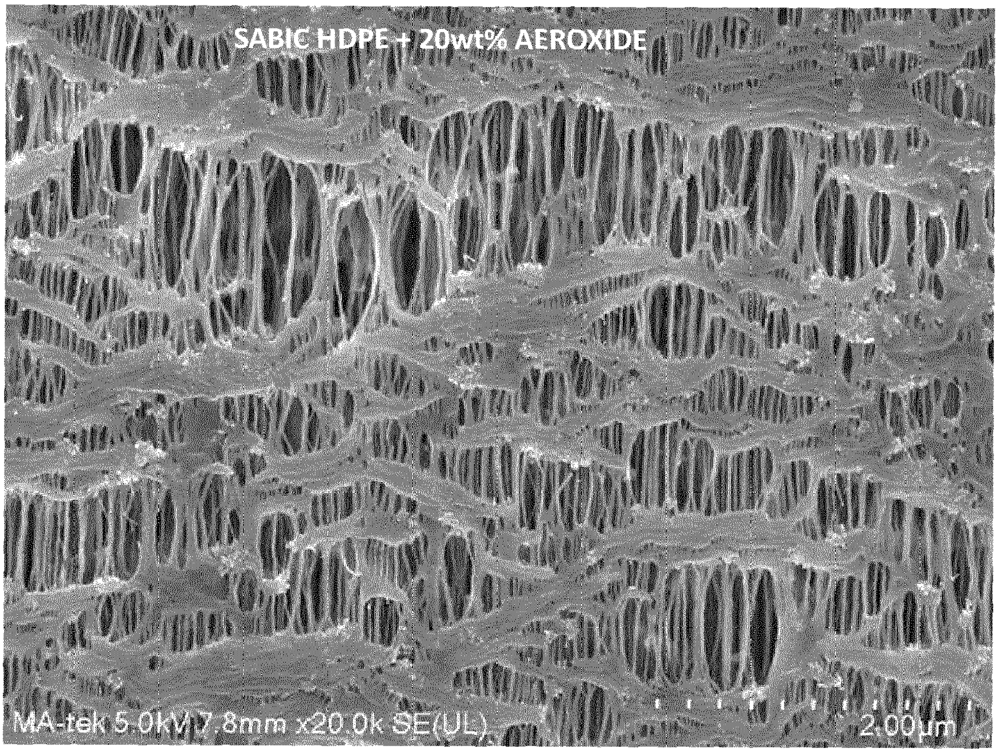


Figure 11 (b)

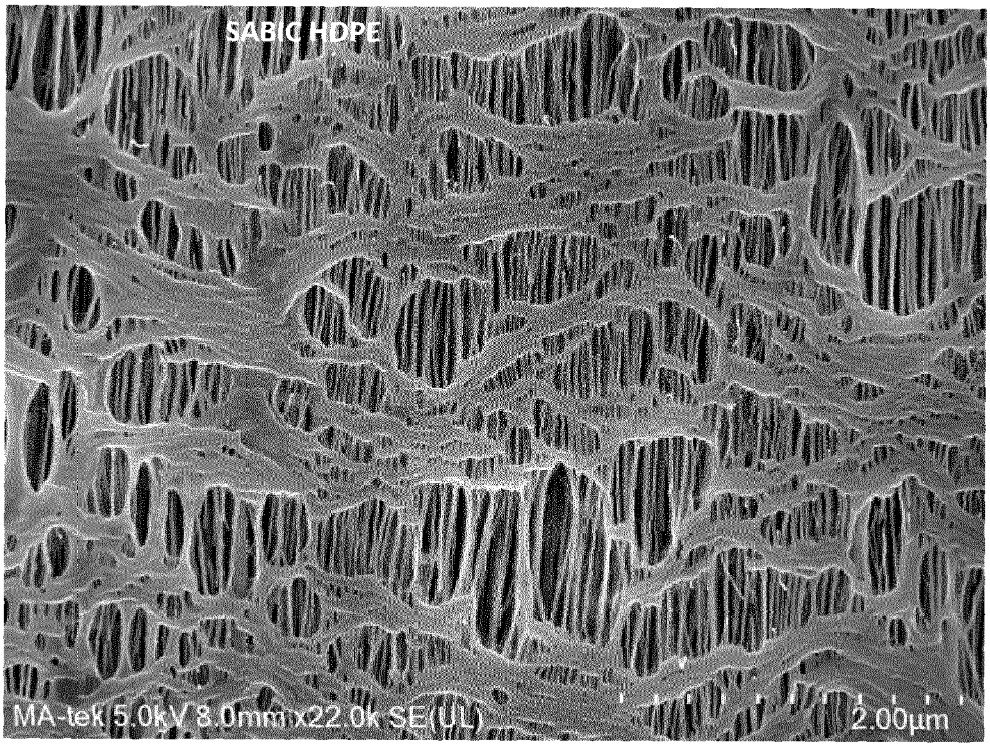

Figure 11 (c)

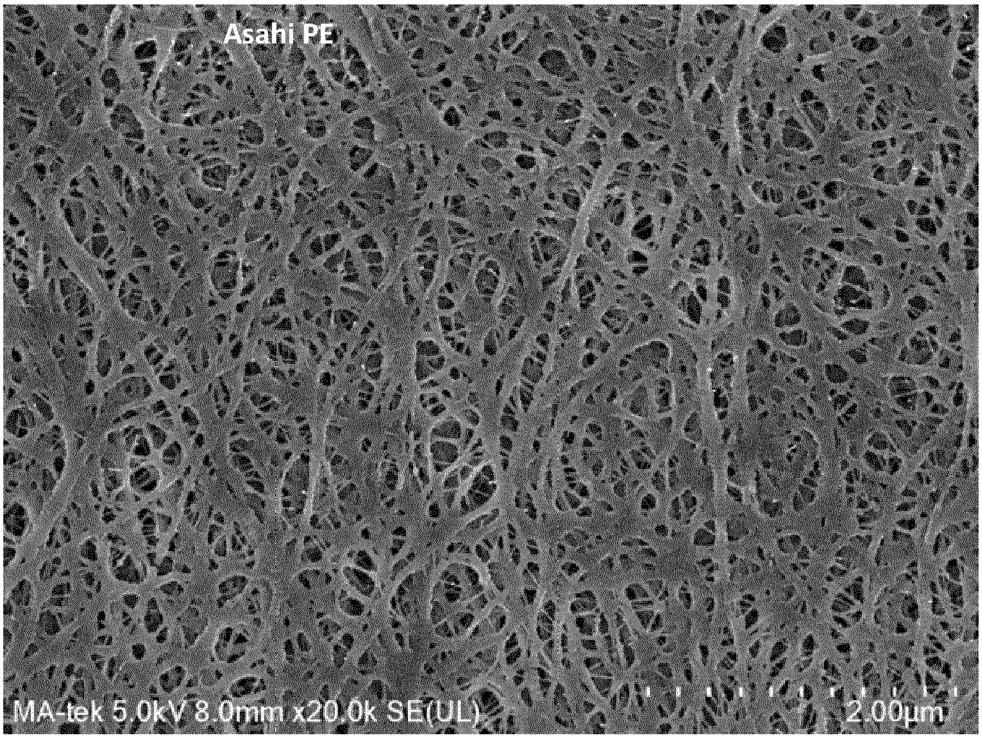


Figure 12

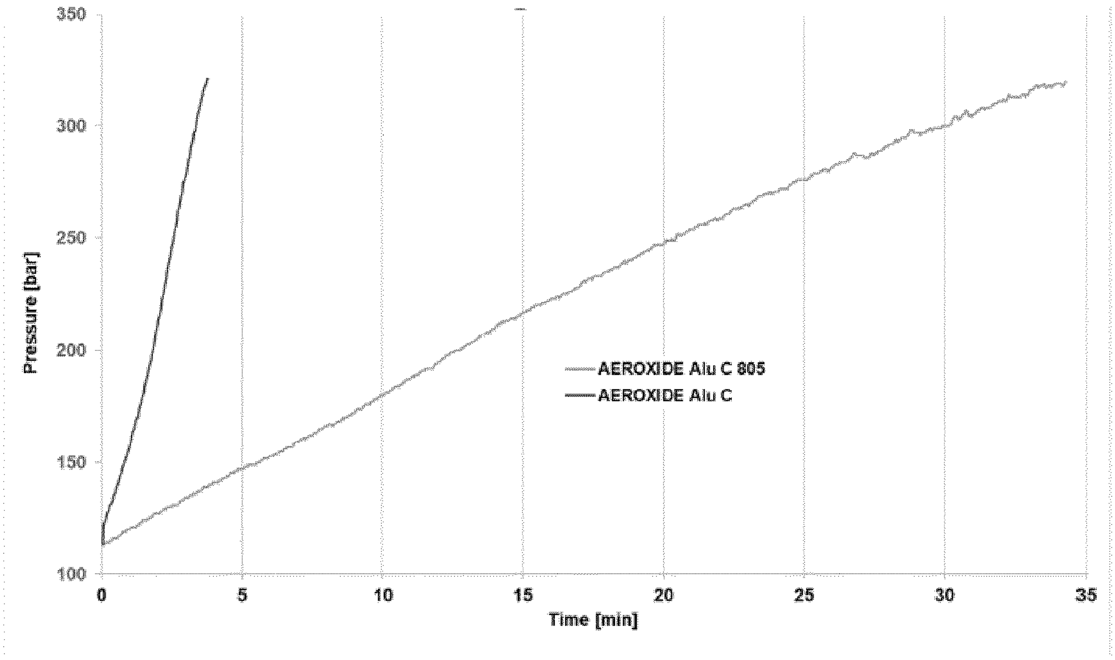

Europäisches Patentamt
European Patent Office
Office européen des brevets

# EUROPEAN SEARCH REPORT

Application Number
EP 20 18 5989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2020/006734 A1 (MURAKAMI MASATO [JP] ET AL) 2 January 2020 (2020-01-02)<br>* paragraphs [0060], [0112]; example comp. ex. 2 *<br>----- | 1,4,7,8,13-15<br>2,3,5,6,9-12 | INV.<br>H01M10/0525<br>H01M2/14<br>H01M2/16 |
| X<br>A | JP 2008 094911 A (MITSUBISHI PLASTICS IND) 24 April 2008 (2008-04-24)<br>* paragraphs [0025], [0048], [0049]; claims 1,3,7,8; examples *<br>----- | 1,4-9,11-15<br>2,3,10 | |

TECHNICAL FIELDS SEARCHED (IPC)

H01M

The present search report has been drawn up for all claims

1

| Place of search | Date of completion of the search | Examiner |
|---|---|---|
| Munich | 21 December 2020 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 18 5989

This annex lists the patent family members relating to the patent documents cited in the above-mentioned European search report. The members are as contained in the European Patent Office EDP file on
The European Patent Office is in no way liable for these particulars which are merely given for the purpose of information.

21-12-2020

| Patent document cited in search report | Publication date | Patent family member(s) | Publication date |
|---|---|---|---|
| US 2020006734 A1 | 02-01-2020 | CN 110366787 A | 22-10-2019 |
| | | EP 3709391 A1 | 16-09-2020 |
| | | JP 6667038 B2 | 18-03-2020 |
| | | JP 6667051 B2 | 18-03-2020 |
| | | JP 2020004729 A | 09-01-2020 |
| | | JP WO2019093498 A1 | 21-11-2019 |
| | | KR 20190112063 A | 02-10-2019 |
| | | KR 20200028505 A | 16-03-2020 |
| | | US 2020006734 A1 | 02-01-2020 |
| | | WO 2019093498 A1 | 16-05-2019 |
| JP 2008094911 A | 24-04-2008 | JP 5042583 B2 | 03-10-2012 |
| | | JP 2008094911 A | 24-04-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6432586 B1
- US 6949315 B1
- US 20120145468 A1
- US 8003204 B2